# FASCICULE DE BREVET EUROPEEN

(11) **EP 1 791 744 B1**
(45) Date de publication et mention de la délivrance du brevet: **07.05.2008**
(21) Numéro de dépôt: 05798170.6
(22) Date de dépôt: 05.09.2005
(51) Int. Cl.: B60W 30/18, B60W 10/06, B60W 10/10, B60W 40/06, F16H 59/48

(54) **PROCEDE D'ELABORATION D'UNE CONSIGNE ADAPTEE A UNE SITUATION DE VIRAGE POUR UN DISPOSITIF DE TRANSMISSION D'UN GROUPE MOTOPROPULSEUR DE VEHICULE AUTOMOBILE ET DISPOSITIF CORRESPONDANT**
VERFAHREN ZUR ERZEUGUNG EINES AN EINE KURVENSITUATION ANGEPASSTEN STEUERSOLLWERTES FÜR EINE FAHRZEUGMOTOR-GETRIEBEEINHEIT, GETRIEBEVORRICHTUNG UND ENTSPRECHENDE VORRICHTUNG
METHOD FOR PRODUCING A SETPOINT ADAPTED TO A CORNERING SITUATION FOR A MOTOR VEHICLE ENGINE-TRANSMISSION UNIT TRANSMISSION DEVICE AND CORRESPONDING DEVICE

(30) Priorité: 10.09.2004 FR 0409646
(43) Date de publication de la demande: 06.06.2007
(73) Titulaire: RENAULT S.A.S., 92100 Boulogne Billancourt (FR)
(72) Inventeur: ROUDEAU, Frédéric, F-94400 VITRY SUR SEINE (FR); BRETHEAU, Jean, F-92160 ANTONY (FR); VERMUSE, Vincent, F-91180 ST GERMAIN LES ARPAJONS (FR)
(86) Numéro de dépôt international: PCT/FR2005/050708
(87) Numéro de publication internationale: WO 2006/030142

(56) Documents cités:
- EP-A- 0 874 149
- EP-A- 1 275 551
- FR-A- 2 834 939
- US-A1- 2002 099 490

## Description

La présente invention concerne un procédé d'élaboration d'une consigne pour une transmission d'un groupe moto-propulseur de véhicule automobile en situation dite de virage. Elle concerne aussi un dispositif mettant en oeuvre un tel procédé d'élaboration de consigne.

Ce procédé s'applique avantageusement aux dispositifs de transmission automatisée notamment les Boîtes à Commande Impulsionnelle dites BCI, les Boîtes à Commande Automatique dites BVA, les Boîtes de Vitesses Robotisées dites BVR, mais aussi les transmissions à rapport continu telles que les CVT (« Continuous Variable Transmission » en langue anglaise), les IVT (« Infinitely Variable Transmission » en langue anglaise) et les transmissions hybrides.

Une transmission automatisée de véhicule automobile comporte classiquement un bloc de commande recevant un ou plusieurs paramètres d'entrée interprétant entre autres, la volonté du conducteur. Puis, en fonction de la valeur de ces paramètres, le bloc de commande délivre une consigne de commande destinée aux roues du véhicule automobile.

Une évolution d'un tel bloc de commande a déjà été décrite dans le document FR-A-2827339, au nom de la Demanderesse. Ce document détaille un dispositif de contrôle du point de fonctionnement d'un groupe motopropulseur. Le contrôle réalisé par ce dispositif est un contrôle en couple à appliquer aux roues du véhicule automobile. Tel que définie dans le document FR-A-2827339, la valeur du couple à appliquer aux roues du véhicule automobile, est calculée directement au niveau des roues du véhicule automobile.

Le dispositif du document FR-A-2827339 possède un module d'interprétation de la volonté du conducteur appelé module IVC.

Le module IVC génère une consigne de couple à appliquer aux roues, à destination d'un bloc d'optimisation du point de fonctionnement OPF. Ce dernier transmet ledit couple en vue d'un contrôle en couple à appliquer aux roues du véhicule automobile. Le bloc OPF génère simultanément une consigne de régime moteur à partir dudit couple à appliquer aux roues du véhicule automobile. On détermine cette consigne de couple à appliquer aux roues du véhicule automobile en fonction de la volonté du conducteur, des caractéristiques du véhicule automobile et de son environnement, afin d'adapter au mieux le comportement du véhicule automobile, selon les situations de conduite.

En phase de virage, un conducteur, au volant d'un véhicule automobile équipé d'une transmission automatique classique doit faire face à des situations de conduite inconfortables.

Par exemple, en abordant un virage, le conducteur relâche généralement la pédale d'accélération. La boîte de vitesse automatique qui était au préalable sur un rapport donné, passe alors directement au rapport supérieur du fait des lois de passage classique d'une boîte de vitesse automatique. Elle prive ainsi le véhicule automobile de frein moteur. Le passage au rapport supérieur provoque alors une sensation désagréable d'embarquement du véhicule automobile.

En situation de conduite, lorsque le conducteur aborde un virage sur un rapport élevé, (le quatrième rapport par exemple), et ralentit au cours de ce virage, il se trouve en général sur le même rapport élevé en sortie du virage. Il doit donc enfoncer la pédale d'accélérateur au maximum afin de provoquer la relance du véhicule automobile. Cette action est souvent mal ressentie de la part du conducteur et des passagers du véhicule automobile.

On connaît déjà dans l'état de la technique, des procédés et des dispositifs associés qui permettent d'effectuer des adaptations pour tenter d'améliorer le confort de passager en phase de virage.

Le document US-5 514 051 déposé par Porsche, propose un procédé consistant à régler des paramètres de conduite du véhicule automobile en fonction de jeux de réglage prédéfinis. Lorsque le véhicule automobile se trouve dans un état particulier, un état de virage par exemple, un calculateur se réfère alors à ces profils prédéterminés pour régler les paramètres de conduite.

La solution proposée par le document US-5 514 051 nécessite de définir, lors de la construction de chaque véhicule automobile, une série de profils de conduite de référence.

On connaît également par les documents FR-2 779 793 déposé par la Demanderesse et FR-2 827 026 déposé par la Demanderesse et PSA, une méthode de correction basée sur des lois de passage des rapports en situation de virage, selon divers paramètres prédéterminés tels que par exemple la vitesse de déplacement ou l'accélération latérale du véhicule automobile. Ces lois de passage permettent de conserver un rapport ou de rétrograder en situation de virage. Cette solution, adaptée aux transmissions automatiques à rapports discrets, ne l'est pas du tout dans le cas de transmissions automatiques à rapports continus.

Dans le document FR-2 834 939 au nom de la Demanderesse, on propose de réaliser une adaptation de la consigne de commande du groupe motopropulseur pour des phases de conduite particulières, notamment lors des phases de virage. L'adaptation de la consigne se fait au niveau du régime moteur.

La présente invention a pour but de remédier aux inconvénients précités. Le principe de l'invention consiste à prévoir une adaptation de la consigne de couple à appliquer aux roues du véhicule automobile afin d'améliorer le comportement du véhicule automobile en situation de virage. L'invention prévoit en outre une réserve de couple applicable aux roues du véhicule automobile pour aider à la relance après chaque virage. Cette adaptation en phase de virage est appliquée directement au couple calculé au niveau de la roue comme défini précédemment, ce qui permet une plus grande précision au niveau des corrections apportées.

En outre, l'adaptation proposée par l'invention est capable de fonctionner avec tout type de transmission.

A cet effet, l'invention propose un procédé de commande d'une transmission automatisée d'un groupe motopropulseur pour véhicule automobile. Ce procédé comprend une étape d'élaboration d'une consigne de couple à appliquer à la roue, composée de deux composantes statique et dynamique élaborées en fonction de données d'entrée représentatives des caractéristiques du véhicule automobile, de la volonté du conducteur et de l'environnement du véhicule automobile. La composante statique de couple fait l'objet d'une adaptation en phase de virage et au-delà de ladite phase de virage, en fonction d'une liste de paramètres prédéterminés, ladite adaptation en phase de virage comprenant les étapes suivantes :
a) produire une composante dynamique de couple brute représentative de la volonté du conducteur en fonction de paramètres d'entrée prédéterminés, puis la corriger pour obtenir une composante dynamique de couple,
b) déterminer une composante statique de couple brute à partir de ladite composante dynamique de couple,
c) calculer une composante statique de couple adaptée à une situation de virage, en fonction de ladite composante statique de couple brute.

Ce procédé permet de générer une consigne de couple à appliquer aux roues, adaptée à une situation de virage. Il va permettre d'obtenir un régime moteur adapté à la situation. La solution proposée permet au véhicule automobile de disposer d'une réserve de couple suffisante pour que les passagers du véhicule automobile ne ressentent pas les sensations désagréables liées à un changement de point de fonctionnement du groupe moto-propulseur nécessaire à la reprise de l'accélération en sortie de virage.

De préférence, on intègre ladite composante statique de couple adaptée à une situation de virage avec des corrections supplémentaires, fonction de la phase de conduite considérée, afin de délivrer une composante statique de couple optimale.

Selon un mode de mise en oeuvre, on peut adapter la consigne en phase de virage et au-delà de la phase de virage en fonction d'un signal représentatif de la position de la pédale d'accélération du véhicule automobile.

Selon un autre mode de mise en oeuvre, on peut adapter la consigne en phase de virage et au-delà de la phase de virage en fonction du régime moteur du véhicule automobile.

Selon un autre mode de mise en oeuvre, on peut adapter la consigne en phase de virage et au-delà de la phase de virage en fonction de l'accélération transversale du véhicule automobile.

Selon un autre mode de mise en oeuvre, on peut adapter la consigne en phase de virage et au-delà de la phase de virage en fonction de la vitesse du véhicule automobile.

Selon un autre mode de mise en oeuvre, on peut adapter la consigne en phase de virage et au-delà de la phase de virage en fonction du couple maximal instantané applicable aux roues du véhicule automobile.

Selon un mode de mise en oeuvre préféré, l'étape de calcul de la composante statique de couple adaptée à une situation de virage comprend les sous-étapes suivantes :
d) calculer un signal de consigne de virage brute en fonction de la vitesse du véhicule automobile, de l'accélération transversale du véhicule automobile et du régime moteur du véhicule automobile,
e) construire un premier signal échelon correspondant audit un signal de consigne de virage brute mais retardé et un second signal correspondant audit un signal de consigne de virage brute mais filtrée, et
f) comparer et intégrer ledit signal correspondant audit un signal de consigne de virage brute mais filtré, avec une liste de paramètres d'entrée prédéterminés comprenant la composante statique de couple brute, le couple maximal instantané applicable aux roues du véhicule automobile, la vitesse du véhicule automobile, l'accélération transversale du véhicule automobile.

De préférence, on construit ledit signal de consigne de virage brute en comparant l'accélération transversale du véhicule automobile avec des seuils dynamiques cartographiés en fonction de la vitesse du véhicule automobile et du régime moteur du véhicule automobile.

L'invention a également pour objet un dispositif pour une transmission automatisée d'un groupe motopropulseur pour véhicule automobile apte à délivrer un signal de consigne de couple à appliquer aux roues du véhicule automobile, comprenant deux composantes statique et dynamique, élaborées en fonction de données d'entrée délivrées par un bloc d'entrée qui comprend une liste enregistrée de paramètres représentatifs de la volonté du conducteur, de l'état du véhicule automobile et de l'environnement du véhicule automobile. Le dispositif de commande comprend avantageusement :
- un premier bloc apte à calculer une composante dynamique de couple sans adaptation à la situation de virage,
- un second bloc apte à calculer une composante statique de couple brute, connecté à la sortie dudit premier bloc apte à calculer la composante dynamique de couple sans adaptation à la situation de virage,
- un bloc d'adaptation à la situation de virage délivrant une composante statique de couple adaptée à la situation de virage en fonction d'une liste de paramètres d'entrée prédéterminés.

Selon un mode de réalisation, le dispositif comprend avantageusement des moyens d'intégration de la composante statique de couple adaptée à une situation de virage avec des corrections supplémentaires fonction de la phase de conduite considérée.

La liste de paramètres prédéterminés du bloc d'adaptation à la situation de virage comprend avantageusement la composante statique de couple brute, le couple maximal instantané applicable aux roues du véhicule automobile, la vitesse du véhicule automobile, l'accélération transversale du véhicule automobile et la consigne courante de régime moteur.

Selon un mode de réalisation, le bloc d'adaptation à la situation de virage de la composante statique de couple brute peut comprendre :
- un premier bloc de construction d'un signal de consigne de virage brute,
- un second bloc de construction d'un signal échelon correspondant audit signal de consigne de virage brute mais retardée et d'un signal correspondant audit signal de consigne de virage brute mais filtrée,
- un bloc de filtrage de l'accélération transversale du véhicule automobile,
- un moyen apte à mémoriser une première cartographie délivrant une consigne de pondération en fonction de la vitesse du véhicule automobile,
- un moyen apte à mémoriser une seconde cartographie pour déterminer, en fonction de l'accélération transversale du véhicule automobile filtrée par ledit bloc de filtrage, un pourcentage de l'écart entre la composante de couple maximal instantané applicable aux roues du véhicule automobile et la composante statique de couple brute,
- des moyens de comparaison et d'intégration dudit signal de consigne de virage brute mais filtré, avec la composante statique brute de couple, du couple maximal instantané applicable aux roues du véhicule automobile, la vitesse du véhicule automobile, le régime moteur du véhicule automobile et l'accélération transversale du véhicule automobile.

De préférence, le premier bloc de construction comprend des moyens aptes à mémoriser deux cartographies relatives respectivement à des seuils positif et négatif de l'accélération transversale du véhicule automobile et des moyens de comparaison aptes à générer le signal brut représentatif du virage en fonction d'une liste de paramètres d'entrée prédéterminés.

Selon un mode de réalisation, la liste de paramètres prédéterminés peut comprendre le régime moteur du véhicule automobile, l'accélération transversale du véhicule automobile et la vitesse du véhicule automobile.

D'autres avantages et caractéristiques de l'invention apparaîtront à l'examen de la description détaillée d'un mode de réalisation de l'invention nullement limitatif, et des dessins annexés, sur lesquels :
- la figure 1 est un schéma synoptique d'un exemple de réalisation d'un module IVC intégrant l'adaptation de la consigne en phase de virage,
- la figure 2 représente plus précisément un exemple de réalisation d'un détail du schéma de la figure 1,
- la figure 3 illustre un exemple des signaux délivrés par un bloc du schéma représenté sur la figure 2,
- la figure 4 représente plus en détail un exemple de réalisation d'une partie du schéma de la figure 2.

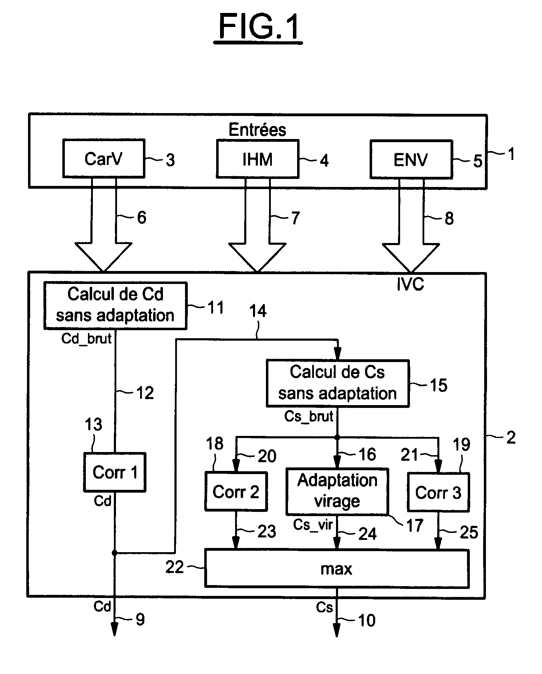

On se réfère à la figure 1. On a représenté sur cette figure l'intégration du dispositif d'adaptation de la consigne de couple à appliquer aux roues du véhicule automobile en phase de virage, dans la boîte de transmission automatisée du véhicule automobile (non représentée).

Ce dispositif comprend deux blocs 1 et 2, respectivement un bloc d'entrées 1 et un module 2 IVC.

Le bloc d'entrée 1 a pour fonction de délivrer les paramètres d'entrée au module 2 pour le réglage de la consigne de couple à appliquer aux roues du véhicule automobile, en phase de virage. Le bloc 1 reçoit en entrée des signaux délivrés par des capteurs intégrés au véhicule automobile (non représentés).

Ces données d'entrée, transmises au module 2 par le bloc 1, peuvent être délivrées respectivement à chaque bloc fonctionnel inclus dans ce module 2.

Le bloc d'entrée 1 comprend trois modules 3, 4 et 5. Chacun de ces trois module délivre au module 2 un type de données d'entrée prédéterminé.

Un premier module 3 noté CarV est capable d'élaborer les données concernant les caractéristiques du véhicule automobile. Celles-ci sont programmées et mémorisées dans une mémoire commune au dispositif (non représentée) par le constructeur pour caractériser le comportement du véhicule livré à un client.

Un deuxième module 4 noté IHM (interface homme/machine) est capable d'élaborer des données concernant la volonté du conducteur. Ces données interprètent les souhaits du conducteur. Elles peuvent comprendre par exemple des signaux représentatifs de la pédale de frein ou d'accélération du véhicule automobile ou encore un signal interprétant la sportivité du conducteur. Dans un mode de réalisation, on note que le contrôle de la boîte de transmission automatisée peut évaluer la sportivité du conducteur de 0 à 100 %.

Un troisième module noté 5 ENV est capable d'élaborer des signaux concernant l'environnement du véhicule automobile. Ces derniers permettent de tenir compte de l'état du véhicule automobile et de sa situation dans l'environnement. Ils comprennent par exemple des signaux correspondant au régime moteur, à la vitesse ou encore à l'accélération latérale du véhicule automobile, particulièrement en situation de virage.

Les signaux délivrés par les trois modules 3, 4 et 5 sont élaborés à partir de signaux provenant de capteurs intégrés au véhicule automobile (non représentés).

Ces trois modules 3, 4 et 5 sont respectivement connectés au module 2 IVC par l'intermédiaire des connexions 6, 7 et 8.

Le module 2 IVC, décrit dans le document FR-A-2 827 339, au nom de la Demanderesse, représente un bloc apte à générer une consigne de couple à appliquer aux roues du véhicule automobile en interprétant la volonté du conducteur.

Le module 2 reçoit en entrée les paramètres d'entrée élaborés par le bloc 1 et délivre en sortie les composantes dynamique Cd (ou Consigne de couple dynamique) et statique Cs (ou Consigne de couple statique) de la consigne de couple à appliquer aux roues du véhicule automobile. Les deux consignes sont respectivement transmises par l'intermédiaire des connexions 9 et 10. Les consignes Cd et Cs sont des cibles destinées à être optimisées de manière à élaborer une consigne de régime moteur optimale.

La consigne de couple dynamique Cd est la valeur du couple que le conducteur souhaite voir réaliser instantanément. La consigne de couple statique Cs se définit comme la future consigne de couple que le conducteur pourrait demander et que le groupe motopropulseur doit rendre immédiatement disponible au niveau des roues du véhicule automobile. La consigne Cs évolue lentement. En effet, elle n'a pas pour but de répondre à une demande immédiate du conducteur. Elle doit être le reflet d'une tendance imposée par le comportement du conducteur depuis une période prédéterminée. En d'autres termes, le couple Cs correspond à la valeur de couple applicable aux roues du véhicule automobile que le conducteur souhaiterait obtenir en rechargeant la pédale d'accélération du véhicule automobile.

Selon l'invention, le module 2, comprend trois blocs fonctionnels 11, 15 et 17.

Le premier bloc fonctionnel est un bloc 11 (Calcul de Cd sans adaptation) apte à calculer une consigne de couple dynamique sans adaptation notée Cd_brut. Cette consigne Cd_brut est calculée à partir des signaux représentatifs de la position de la pédale d'accélérateur du véhicule automobile, du régime du moteur thermique du véhicule automobile et de la vitesse du véhicule automobile ; ces signaux étant délivrés par le bloc d'entrée 1.

La consigne Cd_brut peut subir des corrections supplémentaires, par exemple une adaptation de la consigne en situation de pente. Pour cela, la consigne Cd_brut est transmise par l'intermédiaire de la connexion 12 à un bloc correctif 13 noté Corr1, qui délivre en sortie la consigne Cd.

Le second bloc fonctionnel est un bloc 15 (Calcul de Cs sans adaptation) qui est capable de calculer une consigne de couple statique Cs_brut sans adaptation particulière. La consigne Cs_brut est construite à partir du couple dynamique Cd, issu du bloc 13 Corr1 et transmise par la connexion 14. En outre, la consigne Cs_brut est calculée en fonction de paramètres comme la sportivité du conducteur par exemple ; ce paramètre peut être, par exemple, calculé à partir du signal représentatif de la position de la pédale d'accélération du véhicule automobile, délivré par le bloc d'entrée 1.

La consigne Cs_brut est délivrée, par l'intermédiaire d'une connexion 16 au troisième bloc fonctionnel 17 intégré au module 2. Le bloc 17 (Adaptation virage) a pour fonction d'élaborer, à partir de la consigne Cs_brut, une consigne de couple applicable aux roues du véhicule automobile, adaptée à la situation de virage Cs_vir. La consigne Cs_vir délivrée par le bloc 17 donne la possibilité d'améliorer le point de fonctionnement du véhicule automobile. En effet, le point de fonctionnement va permettre de pré-positionner la valeur du régime moteur, à une valeur anticipant la volonté du conducteur. Le bloc 17 sera décrit plus en détail ci-après.

Parallèlement à l'adaptation à la situation de virage, la consigne Cs_brut peut subir d'autres corrections, par exemple en situation de freinage ou de pente. Ces corrections supplémentaires sont effectuées respectivement par les deux blocs correctifs 18 Corr2 et 19 Corr3. La consigne Cs_brut est transmise aux blocs 18 et 19 par les connexions respectives 20 et 21.

Les trois blocs 17, 18 et 19 délivrent leurs consignes de sortie au bloc 22 noté max. Le bloc 18 délivre sa consigne au bloc 22 par une connexion 23, le bloc 17 par une connexion 24 et le bloc 19 par une connexion 25.

Le bloc 22, placé en sortie des blocs 17, 18 et 19, arbitre les différentes corrections opérées par ces trois blocs. En effet, la consigne Cs peut comprendre à la fois une adaptation en virage et une adaptation en freinage par exemple. Le bloc 22 délivre alors en sortie une consigne de sortie Cs intégrant les différentes corrections apportées.

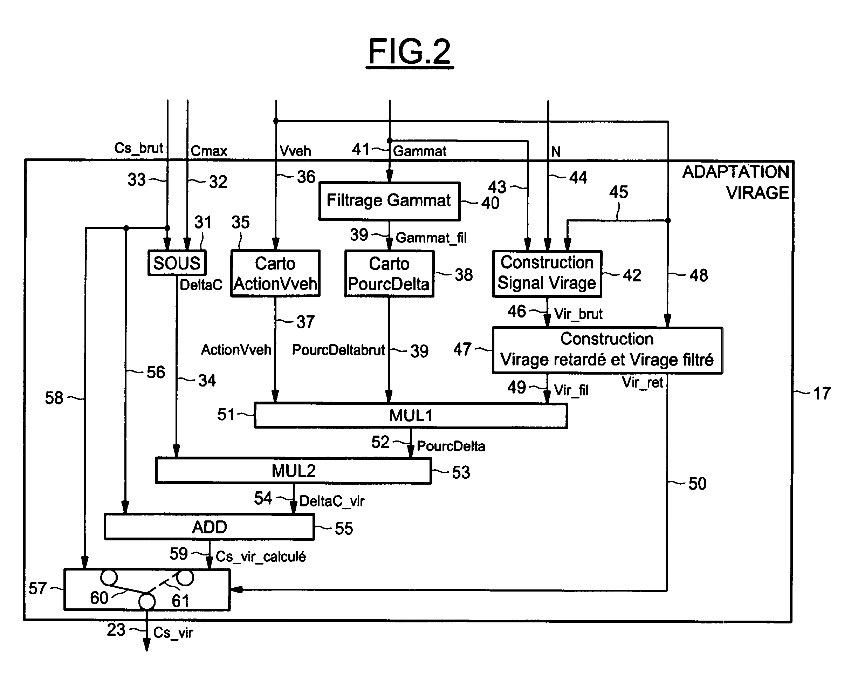

On se réfère maintenant à la figure 2. Cette figure détaille le bloc 17 réalisant l'adaptation de la consigne Cs_brut en phase de virage.

Le bloc 17 reçoit différents paramètres d'entrée tels que la vitesse du véhicule automobile notée Vveh, la consigne de régime moteur notée N et l'accélération transversale notée Gammat. L'accélération transversale peut être mesurée par un accéléromètre intégré au véhicule automobile, mais également calculée à partir de la vitesse du véhicule automobile. Tous ces paramètres d'entrée proviennent du bloc d'entrée 1, représenté sur la figure 1, et délivrés aux différents blocs inclus dans le module 2.

Le bloc 17 reçoit également Cs_brut issue du bloc 15 (Calcul de Cs sans adaptation), ainsi que la composante Cmax qui est le couple maximum applicable aux roues du véhicule automobile, que le groupe moto-propulseur peut fournir instantanément aux roues du véhicule automobile. Cette composante Cmax est produite à l'aide d'une table enregistrée (non représentée) qui est adressée, dans un mode préféré de réalisation, en fonction de la vitesse de rotation mesurée à la roue du véhicule automobile. La valeur Cmax évolue donc dynamiquement en fonction de la vitesse du véhicule automobile.

Le bloc 17 comprend plusieurs blocs fonctionnels permettant la construction de la consigne Cs_vir.

En premier lieu, le bloc 17 comprend un soustracteur 31 SOUS, dont le rôle est d'effectuer la différence entre la composante Cmax, délivrée par l'intermédiaire de la connexion 32, et la consigne Cs_brut délivrée par la connexion 33. La différence, notée DeltaC, est délivrée en sortie du soustracteur 31 par l'intermédiaire d'une connexion 34.

Une cartographie 35 (Carto ActionVeh) est placée parallèlement au soustracteur 31, et reçoit en entrée la vitesse du véhicule automobile Vveh par une connexion 36. La cartographie 35 élabore une pondération notée ActionVeh, prenant des valeurs entre « 0 » et « 1 » et délivrée par la connexion 37. Le signal ActionVeh, délivré par la cartographie 35, permet d'annuler la correction en phase de virage en dessous d'un seuil de vitesse du véhicule automobile adapté, déterminé par la cartographie 35. Le signal ActionVeh assure alors une disparition progressive du filtrage en fonction de la variation de la vitesse du véhicule automobile.

Une deuxième cartographie 38 (Carto PourcDelta) située en parallèle au bloc 31 reçoit en entrée, par une connexion 39, une valeur d'accélération transversale notée Gammat_fil. Cette valeur Gammat_fil provient d'un filtre 40 (Filtrage Gammat) inclus dans le bloc 17. Le bloc 40 est apte à filtrer, selon une loi de filtrage spécifique prédéterminée, la variable Gammat, transmise au bloc 40 par une connexion 41. La cartographie 38 délivre en sortie, par la connexion 39, une variable notée PourcDeltabrut. Cette variable est un pourcentage brut de l'écart entre la consigne Cs_brut et la composante C_max. Cet écart entre la consigne Cs_brut et la composante C_max est la variable DeltaC, qui a été calculée par le bloc 31.

Un quatrième bloc 42 (Construction Signal Virage) est situé en parallèle au bloc 41. Le rôle du bloc 42 est de construire une première consigne de reconnaissance du virage Vir_brut. Le bloc 42 reçoit en entrée, l'accélération transversale du véhicule automobile Gammat par la connexion 43, le régime moteur N par la connexion 44 et la vitesse du véhicule automobile Vveh par la connexion 45. À partir de ces paramètres d'entrée, le bloc 42 est apte à construire une variable notée Vir_brut délivrée par une connexion 46. L'élaboration de cette consigne sera décrite plus en détail ci-après.

Un bloc 47 (Construction Virage retardé et Virage filtré) est placé en sortie du bloc 42 de construction du signal en situation de virage. Le bloc 47 reçoit en entrée la variable Vir_brut, transmise par la connexion 46. Outre la variable Vir_brut, on applique également à l'entrée du bloc 47 la vitesse du véhicule automobile Vveh, par une connexion 48. À partir des données d'entrée, le bloc 47 construit deux signaux Vir_fil transmis en sortie par une connexion 49 et Vir_ret transmis en sortie par une connexion 50.

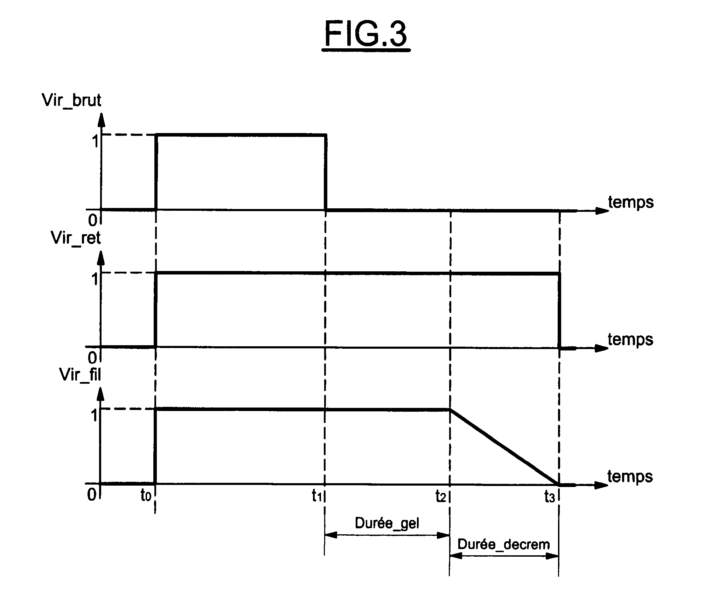

La variation des deux signaux Vir_fil et Vir_ret est représentée sur la figure 3 en fonction du temps. On considère que le signal Vir_brut est un échelon prenant la valeur « 1 » entre t0 et t1 et « 0 » sinon. Le signal Vir_ret permet de maintenir la correction entre t1 et t 3, soit pendant une durée totale égale à Durée_gel+Durée_decrem, après la disparition du signal Vir_brut en t1. Le signal Vir_fil permet quant à lui, d'estomper progressivement l'effet de la correction. Ainsi, le signal Vir_fil prend la valeur « 1 » en t0 jusqu'à t2 puis décroît progressivement, par exemple sous forme d'une rampe linéaire, entre t2 et t3, soit pendant une durée Durée_decrem. Les deux variables Durée_gel et Durée_decrem sont deux variables calibrables par le constructeur. Elles peuvent représenter une durée, comme sur l'exemple de la figure 3, ou une distance parcourue par le véhicule automobile (en intégrant la vitesse du véhicule automobile).

On se réfère à nouveau à la figure 2. Le signal Vir_fil est transmis à un premier multiplieur 51 MUL1 par la connexion 49. Le multiplieur 51 est situé en sortie des blocs 31, 35, 38 et 47 et reçoit également les signaux ActionVeh et PourcDeltabrut respectivement par les connexions 37 et 39. Le signal PourcDelta résultant de la multiplication des trois signaux d'entrée, Vir_fil, ActionVeh et PourcDeltabrut, représente le pourcentage de la variation de couple à appliquer aux roues du véhicule automobile que l'on souhaite réellement appliquer.

Un second multiplieur 53 MUL2 est placé en sortie du premier multiplieur 51. Le multiplieur 53 reçoit la variable PourcDelta calculée précédemment et transmise par une connexion 52. Le multiplieur 53, reçoit par la connexion 34, la variable DeltaC délivrée par le soustracteur 31. En multipliant les deux variables PourcDelta et DeltaC, le multiplieur 53 délivre en sortie, par une connexion 54, le signal DeltaC_vir qui représente la variation du couple statique applicable aux roues du véhicule automobile, que l'on désire appliquer.

Un additionneur 55 ADD situé en sortie du multiplieur 53 reçoit en entrée, la variable DeltaC_vir précitée, par la connexion 54, ainsi que le couple Cs_brut, par une connexion 56. De la somme des deux signaux DeltaC_vir et Cs_brut, résulte la consigne Cs_vir_calculé, qui est le couple statique potentiellement applicable aux roues du véhicule automobile en phase de virage et au-delà.

Un sélecteur 57 est placé en sortie de l'additionneur 55. Le sélecteur 57 reçoit en entrée, la consigne Cs_vir_calculé, transmise par une connexion 59 et la consigne de couple Cs_brut transmise par une connexion 58. Le sélecteur 57 reçoit également un signal de commande qui est le signal Vir_ret élaboré par le bloc 47. En fonction du signal de commande Vir_ret, le sélecteur 57 est apte à délivrer un signal de sortie correspondant à l'un ou l'autre de ces signaux d'entrée.

En fonction de la valeur de Vir_ret, on se retrouve dans l'une des configurations représentées sur la figure 2. Si « Vir_ret=0 », la correction en phase de virage n'est pas appliquée. Le multiplexeur 57 établit une connexion 60 entre l'entrée où est transmis le signal Cs_brut et sa borne de sortie afin de délivrer la consigne Cs_brut en sortie. Si « Vir_ret=1 », le véhicule automobile se trouve dans une deuxième configuration où il est considéré en situation de virage ou de sortie de virage. On applique donc la correction calculée. Le sélecteur 57 établit une connexion 61 entre l'entrée où est transmise le signal Cs_vir_calculé et sa sortie afin de délivrer la consigne Cs_vir_calculé en sortie. Celle-ci est appliquée tant que le signal de commande Vir_ret est égal à « 1 ».

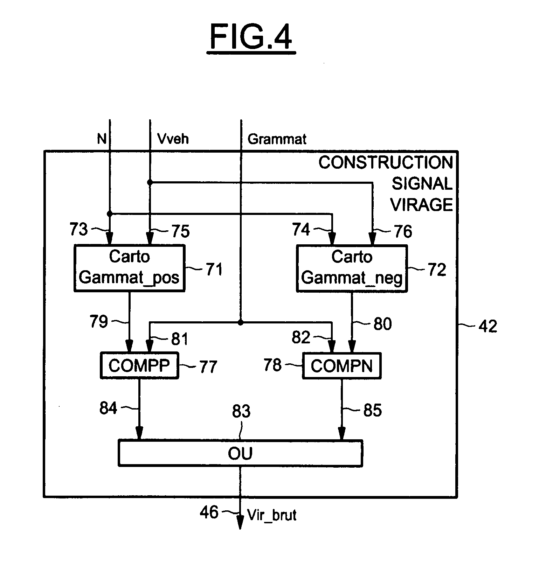

On se réfère maintenant à la figure 4. Cette figure détaille le bloc 42. Le bloc 42 élabore le signal Vir_brut, qui est un signal binaire indiquant si le véhicule automobile est en situation de virage ou non. Le signal Vir_brut prend ainsi la valeur « 1 » si le véhicule automobile est en situation de virage et « 0 » sinon.

Le bloc 42 reçoit différents paramètres d'entrée, délivrés aux blocs inclus dans le module 2 par le bloc d'entrée 1, représenté sur la figure 1. Le bloc 42 reçoit notamment des signaux représentatifs du régime moteur N, de la vitesse du véhicule automobile Vveh et de l'accélération transversale du véhicule automobile, Gammat.

À l'intérieur du bloc 42 sont mémorisées deux cartographies 71 et 72 notées respectivement Carto Gammat_pos et Carto Gammat_neg. Ces deux cartographies peuvent élaborer des valeurs de seuils dynamiques positif et négatif, correspondant respectivement à un virage à droite ou à gauche. Dans une variante du mode de réalisation de l'invention, on pourrait utiliser une seule cartographie et élaborer un seuil en fonction de la valeur absolue de Gammat.

Les seuils sont cartographiés en fonction du régime moteur N transmis par des connexions 73 et 74, et de la vitesse du véhicule automobile Vveh transmise par des connexions 75 et 76.

Les deux cartographies 71 et 72 peuvent délivrer chacune une valeur de seuil transmise respectivement à deux comparateurs COMPP 77 et COMPN 78. Les deux valeurs de seuil sont transmises par l'intermédiaire des connexions respectives 79 et 80.

Les deux comparateurs 77 et 78 ont pour fonction de comparer la valeur de l'accélération transversale Gammat avec les deux valeurs de seuils élaborées par les cartographies 71 et 72. L'accélération transversale Gammat est transmise par des connexions 81 et 82. Si le véhicule automobile aborde un virage à droite, le comparateur 77 délivre un signal ayant la valeur « 1 » par la connexion 84, tandis que l'autre comparateur 78 délivre un signal ayant la valeur « 0 ». Si le véhicule automobile aborde un virage à gauche, le comparateur 78 délivre un signal ayant la valeur « 1 » par la connexion 85, tandis que l'autre comparateur 77 délivre un signal ayant la valeur « 0 ». Si le véhicule automobile n'est pas en situation de virage les deux comparateurs délivrent chacun un signal ayant la valeur « 0 ».

Un bloc 83 OU est placé en sortie des deux comparateurs 77 et 78. Le bloc 83 reçoit en entrée les signaux transmis par les connexions 84 et 85 par les comparateurs 77 et 78 et délivre en sortie, par la connexion 46, le signal Vir_brut. Si l'un des signaux d'entrée, délivrés par les comparateurs 77 et 78, est à « 1 », le signal Vir_but prend alors la valeur « 1 » ; il prend la valeur « 0 » sinon.

On se réfère à nouveau à la figure 2. La composante statique de couple Cs ainsi augmentée, par la composante DeltaC_vir, en situation de virage apporte plusieurs avantages. Elle permet de pré-positionner le groupe moto-propulseur sur un point de fonctionnement, offrant ainsi une plus grande réserve de couple applicable à la roue de véhicule automobile, ce qui permet au véhicule automobile d'accélérer plus rapidement en sortie de virage, en réponse à une sollicitation du conducteur. En effet, pour obtenir la réserve de couple applicable à la roue de véhicule automobile, le groupe moto-propulseur se positionne sur un point de fonctionnement en régime moteur (élaboré en fonction du couple à appliquer à la roue de véhicule automobile) supérieur à ce qu'il aurait été sans cette demande augmentée. Il en résulte un effet acoustique connu du conducteur lors d'un rétrogradage en début de virage et surtout, cela empêche le régime moteur de descendre rapidement à des valeurs faibles en situation de virage, ce à quoi le conducteur n'est pas habitué.

## Revendications

1. Procédé de commande d'une transmission automatisée d'un groupe motopropulseur pour véhicule automobile comprenant une étape d'élaboration d'une consigne de couple à appliquer à la roue, composée de deux composantes statique (Cs) et dynamique (Cd) élaborées en fonction de données d'entrée représentatives des caractéristiques du véhicule automobile, de la volonté du conducteur et de l'environnement du véhicule automobile, **caractérisé par le fait que** la composante statique (Cs) de couple fait l'objet d'une adaptation en phase de virage et au-delà de ladite phase de virage, en fonction d'une liste de paramètres prédéterminés, ladite adaptation en phase de virage comprenant les étapes suivantes :
a) produire une composante dynamique de couple brute (Cd_brut) représentative de la volonté du conducteur en fonction de paramètres d'entrée prédéterminés, puis la corriger pour obtenir une composante dynamique de couple (Cd),
b) déterminer une composante statique de couple brute (Cs_brut) à partir de ladite composante dynamique de couple (Cd),
c) calculer une composante statique de couple adaptée à une situation de virage (Cs_vir), en fonction de ladite composante statique de couple brute (Cs_brut).

2. Procédé selon la revendication 1, **caractérisé par le fait que** l'on intègre ladite composante statique de couple adaptée à une situation de virage (Cs_vir) avec des corrections supplémentaires, fonction de la phase de conduite considérée, afin de délivrer une composante statique de couple optimale.

3. Procédé selon l'une quelconque des revendications précédentes, **caractérisé par le fait que** l'on adapte la consigne en phase de virage et au-delà de la phase de virage en fonction d'un signal représentatif de la position de la pédale d'accélération du véhicule automobile.

4. Procédé selon l'une quelconque des revendications 1 à 3, **caractérisé par le fait que** l'on adapte la consigne en phase de virage et au-delà de la phase de virage en fonction du régime moteur (N) du véhicule automobile.

5. Procédé selon l'une quelconque des revendications 1 à 4, **caractérisé par le fait que** l'on adapte la consigne en phase de virage et au-delà de la phase de virage en fonction de l'accélération transversale (Gammat) du véhicule automobile.

6. Procédé selon l'une quelconque des revendications 1 à 5 **caractérisé par le fait que** l'on adapte la consigne en phase de virage et au-delà de la phase de virage en fonction de la vitesse du véhicule automobile (Vveh).

7. Procédé selon l'une quelconque des revendications 1 à 6 **caractérisé par le fait que** l'on adapte la consigne en phase de virage et au-delà de la phase de virage en fonction du couple maximal instantané applicable aux roues du véhicule automobile (Cmax).

8. Procédé selon l'une quelconque des revendications précédentes, **caractérisé par le fait que** l'étape de calcul de la composante statique de couple adaptée à une situation de virage comprend les sous-étapes suivantes :
d) calculer un signal de consigne de virage brute (Vir_brut)en fonction de la vitesse du véhicule automobile (Vveh), de l'accélération transversale du véhicule automobile (Gammat) et du régime moteur du véhicule automobile (N),
e) construire un premier signal échelon correspondant audit un signal de consigne de virage brute mais retardé (Vir_ret) et un second signal correspondant audit un signal de consigne de virage brute mais filtrée (Vir_fil), et
f) comparer et intégrer ledit signal correspondant audit un signal de consigne de virage brute mais filtré (Vir_ret), avec une liste de paramètres d'entrée prédéterminés comprenant la composante statique de couple brute (Cs_brut), le couple maximal instantané applicable aux roues du véhicule automobile (Cmax), la vitesse du véhicule automobile (Vveh), l'accélération transversale du véhicule automobile (Gammat).

9. Procédé selon la revendication 8, **caractérisé par le fait que** l'on construit ledit signal de consigne de virage brute (Vir_brut) en comparant l'accélération transversale du véhicule automobile (Gammat) avec des seuils dynamiques cartographiés en fonction de la vitesse du véhicule automobile(Vveh) et du régime moteur du véhicule automobile (N).

10. Dispositif d'une transmission automatisée d'un groupe motopropulseur pour véhicule automobile apte à délivrer un signal de consigne de couple à appliquer aux roues du véhicule automobile, comprenant deux composantes statique (Cs) et dynamique (Cd), élaborées en fonction de données d'entrée délivrée par un bloc d'entrée (1) qui comprend une liste enregistrée de paramètres représentatifs de la volonté du conducteur, de l'état du véhicule automobile et de l'environnement du véhicule automobile, **caractérisé en ce qu'**il comprend :
- un premier bloc (11) apte à calculer une composante dynamique de couple sans adaptation à la situation de virage (Cd_brut),
- un second bloc (15) apte à calculer une composante statique de couple brute (Cs_brut), connecté à la sortie dudit premier bloc (15) apte à calculer la composante dynamique de couple sans adaptation à la situation de virage,
- un bloc d'adaptation à la situation de virage (17) délivrant une composante statique de couple adaptée à la situation de virage (Cs_vir) en fonction d'une liste de paramètres d'entrée prédéterminés.

11. Dispositif selon la revendication 10, **caractérisé par le fait qu'**il comprend des moyens d'intégration (22) de la composante statique de couple adaptée à une situation de virage avec des corrections supplémentaires fonction de la phase de conduite considérée.

12. Dispositif selon la revendication 10, **caractérisé par le fait que** la liste de paramètres prédéterminés du bloc d'adaptation à la situation de virage comprend la composante statique de couple brute (Cs_brut), le couple maximal instantané applicable aux roues du véhicule automobile (Cmax), la vitesse du véhicule automobile (Vveh), l'accélération transversale du véhicule automobile (Gammat) et la consigne courante de régime moteur (N).

13. Dispositif selon la revendication 10, **caractérisé par le fait que** le bloc d'adaptation à la situation de virage (17) de la composante statique de couple brute (Cs_brut) comprend :
- un premier bloc (42) de construction d'un signal de consigne de virage brute (Vir_brut),
- un second bloc (47) de construction d'un signal échelon correspondant audit signal de consigne de virage brute mais retardée (Vir_ret) et d'un signal correspondant audit signal de consigne de virage brute mais filtrée (Vir_fil),
- un bloc de filtrage (40) de l'accélération transversale du véhicule automobile (Gammat),
- un moyen apte à mémoriser une première cartographie (35) délivrant une consigne de pondération (ActionVveh) en fonction de la vitesse du véhicule automobile (Vveh),
- un moyen apte à mémoriser une seconde cartographie (38) pour déterminer, en fonction de l'accélération transversale (Gammat) du véhicule automobile filtrée par ledit bloc de filtrage (40), un pourcentage (PourcDeltabrut) de l'écart (DeltaC) entre la composante de couple maximal instantané applicable aux roues du véhicule automobile (Cmax) et la composante statique de couple brute (Cs_brut),
- des moyens de comparaison et d'intégration dudit signal de consigne de virage brute mais filtré, avec la composante statique brute de couple (Cs_brut), du couple maximal instantané applicable aux roues du véhicule automobile (Cmax), la vitesse du véhicule automobile (Vveh), le régime moteur du véhicule automobile (N) et l'accélération transversale du véhicule automobile (Gammat).

14. Dispositif selon la revendication 13, **caractérisé par le fait que** le premier bloc de construction (42) comprend des moyens aptes à mémoriser deux cartographies (71, 72) relatives respectivement à des seuils positif et négatif de l'accélération transversale du véhicule automobile (Gammat) et des moyens de comparaison (77, 78) aptes à générer le signal brut représentatif du virage (Vir_brut) en fonction d'une liste de paramètres d'entrée prédéterminés.

15. Dispositif selon la revendication 14, **caractérisé par le fait que** la liste de paramètres prédéterminés comprend le régime moteur du véhicule automobile (N), l'accélération transversale du véhicule automobile (Gammat) et la vitesse du véhicule automobile (Vveh).

## Claims

1. Method of controlling an automated transmission of a power train for a motor vehicle comprising a step of formulating a torque setpoint to be applied to the wheel, composed of two components, static (Cs) and dynamic (Cd), formulated as a function of input data representative of the characteristics of the motor vehicle, of the desire of the driver and of the environment of the motor vehicle, **characterized in that** the static component (Cs) of torque forms the subject of an adaptation in the cornering phase and beyond said cornering phase, as a function of a list of predetermined parameters, said adaptation in the cornering phase comprising the following steps:
a) produce a dynamic component of raw torque (Cd_raw) representative of the desire of the driver as a function of predetermined input parameters, then correct it to obtain a dynamic torque component (Cd),
b) determine a static component of raw torque (Cs_raw) on the basis of said dynamic torque component (Cd),
c) calculate a static torque component adapted to a cornering situation (Cs_cor), as a function of said static component of raw torque (Cs_raw).

2. Method according to Claim 1, **characterized in that** said static torque component adapted to a cornering situation (Cs_cor) is integrated with additional corrections, dependent on the driving phase considered, so as to deliver a static component of optimal torque.

3. Method according to either of the preceding claims, **characterized in that** the setpoint in the cornering phase and beyond the cornering phase is adapted as a function of a signal representative of the position of the accelerator pedal of the motor vehicle.

4. Method according to any one of Claims 1 to 3, **characterized in that** the setpoint in the cornering phase and beyond the cornering phase is adapted as a function of the engine revs (N) of the motor vehicle.

5. Method according to any one of Claims 1 to 4, **characterized in that** the setpoint in the cornering phase and beyond the cornering phase is adapted as a function of the transverse acceleration (Gammat) of the motor vehicle.

6. Method according to any one of Claims 1 to 5, **characterized in that** the setpoint in the cornering phase and beyond the cornering phase is adapted as a function of the speed of the motor vehicle (Vveh).

7. Method according to any one of Claims 1 to 6, **characterized in that** the setpoint in the cornering phase and beyond the cornering phase is adapted as a function of the instantaneous maximum torque applicable to the wheels of the motor vehicle (Cmax).

8. Method according to any one of the preceding claims, **characterized in that** the step of calculating the static torque component adapted to a cornering situation comprises the following sub-steps:
d) calculate a raw cornering setpoint signal (Cor_raw) as a function of the speed of the motor vehicle (Vveh), of the transverse acceleration of the motor vehicle (Gammat) and of the engine revs of the motor vehicle (N),
e) construct a first step signal corresponding to said raw cornering setpoint signal but delayed (Cor_del) and a second signal corresponding to said raw cornering setpoint signal but filtered (Cor_fil), and
f) compare and integrate said signal corresponding to said raw cornering setpoint signal but filtered (Cor_del), with a list of predetermined input parameters comprising the static component of raw torque (Cs_raw), the instantaneous maximum torque applicable to the wheels of the motor vehicle (Cmax), the speed of the motor vehicle (Vveh), the transverse acceleration of the motor vehicle (Gammat).

9. Method according to Claim 8, **characterized in that** said raw cornering setpoint signal (Cor_raw) is constructed by comparing the transverse acceleration of the motor vehicle (Gammat) with dynamic thresholds mapped as a function of the speed of the motor vehicle (Vveh) and of the engine revs of the motor vehicle (N).

10. Device of an automated transmission of a power train for a motor vehicle able to deliver a torque setpoint signal to be applied to the wheels of the motor vehicle, comprising two components, static (Cs) and dynamic (Cd), formulated as a function of input data delivered by an input block (1) which comprises a recorded list of parameters representative of the desire of the driver, of the state of the motor vehicle and of the environment of the motor vehicle, **characterized in that** it comprises:
- a first block (11) able to calculate a dynamic torque component without adaptation to the cornering situation (Cd_raw),
- a second block (15) able to calculate a static component of raw torque (Cs_raw), connected to the output of said first block (11) able to calculate the dynamic torque component without adaptation to the cornering situation,
- a block for adaptation to the cornering situation (17) delivering a static torque component adapted to the cornering situation (Cs_cor) as a function of a list of predetermined input parameters.

11. The device according to Claim 10, **characterized in that** it comprises means (22) for integrating the static torque component adapted to a cornering situation with additional corrections dependent on the driving phase considered.

12. The device according to Claim 10, **characterized in that** the list of predetermined parameters of the block for adaptation to the cornering situation comprises the static component of raw torque (Cs_raw), the instantaneous maximum torque applicable to the wheels of the motor vehicle (Cmax), the speed of the motor vehicle (Vveh), the transverse acceleration of the motor vehicle (Gammat) and the current setpoint of engine revs (N).

13. The device according to Claim 10, **characterized in that** the block for adaptation to the cornering situation (17) of the static component of raw torque (Cs_raw) comprises:
- a first block (42) for constructing a raw cornering setpoint signal (Cor_raw),
- a second block (47) for constructing a step signal corresponding to said raw cornering setpoint signal but delayed (Cor_del) and a signal corresponding to said raw cornering setpoint signal but filtered (Cor_fil),
- a block (40) for filtering the transverse acceleration of the motor vehicle (Gammat),
- a means able to store a first mapping (35) delivering a weighting setpoint (ActionVveh) as a function of the speed of the motor vehicle (Vveh),
- a means able to store a second mapping (38) so as to determine, as a function of the motor vehicle's transverse acceleration (Gammat) filtered by said filtering block (40), a percentage (PercDeltaraw) of the deviation (DeltaC) between the instantaneous maximum torque component applicable to the wheels of the motor vehicle (Cmax) and the static component of raw torque (Cs_raw),
- means for comparing and for integrating said raw cornering setpoint signal but filtered, with the raw static torque component (Cs_raw), of the instantaneous maximum torque applicable to the wheels of the motor vehicle (Cmax), the speed of the motor vehicle (Vveh), the engine revs of the motor vehicle (N) and the transverse acceleration of the motor vehicle (Gammat).

14. Device according to Claim 13, **characterized in that** the first construction block (42) comprises means able to store two mappings (71, 72) relating respectively to positive and negative thresholds of the transverse acceleration of the motor vehicle (Gammat) and comparison means (77, 78) able to generate the raw signal representative of the cornering (Cor_raw) as a function of a list of predetermined input parameters.

15. Device according to Claim 14, **characterized in that** the list of predetermined parameters comprises the engine revs of the motor vehicle (N), the transverse acceleration of the motor vehicle (Gammat) and the speed of the motor vehicle (Vveh).

## Patentansprüche

1. Verfahren zur Steuerung eines automatischen Getriebes eines Antriebsaggregats für ein Kraftfahrzeug, das einen Schritt der Erarbeitung eines an das Rad anzuwendenden Drehmomentsollwerts aufweist, der aus zwei Komponenten, einer statischen (Cs) und einer dynamischen (Cd), besteht, die in Abhängigkeit von Eingangsdaten erarbeitet werden, die für die Eigenschaften des Fahrzeugs, den Willen des Fahrers und die Umgebung des Kraftfahrzeugs repräsentativ sind, **dadurch gekennzeichnet, dass** die statische Drehmomentkomponente (Cs) Gegenstand einer Anpassung in der Kurvenphase und jenseits der Kurvenphase in Abhängigkeit von einer Liste von vorbestimmten Parametern ist, wobei die Anpassung in der Kurvenphase die folgenden Schritte aufweist:
a) Erzeugen einer dynamischen Brutto-Drehmomentkomponente (Cd_brut), die für den Willen des Fahrers in Abhängigkeit von vorbestimmten Eingangsparametern repräsentativ ist, und dann ihre Korrektur, um eine dynamische Drehmomentkomponente (Cd) zu erhalten,
b) Bestimmen einer statischen Brutto-Drehmomentkomponente (Cs_brut) ausgehend von der dynamischen Drehmomentkomponente (Cd),
c) Berechnen einer an eine Kurvensituation (Cs_vir) angepassten statischen Drehmomentkomponente in Abhängigkeit von der statischen Brutto-Drehmomentkomponente (Cs_brut).

2. Verfahren nach Anspruch 1, **dadurch gekennzeichnet, dass** die an eine Kurvensituation (Cs_vir) angepasste statische Drehmomentkomponente mit zusätzlichen Korrekturen, die von der betrachteten Fahrphase abhängen, integriert wird, um eine optimale statische Drehmomentkomponente zu liefern.

3. Verfahren nach einem der vorhergehenden Ansprüche, **dadurch gekennzeichnet, dass** der Sollwert in der Kurvenphase und jenseits der Kurvenphase in Abhängigkeit von einem Signal angepasst wird, das für die Position des Gaspedals des Kraftfahrzeugs repräsentativ ist.

4. Verfahren nach einem der Ansprüche 1 bis 3, **dadurch gekennzeichnet, dass** der Sollwert in der Kurvenphase und jenseits der Kurvenphase in Abhängigkeit von der Motordrehzahl (N) des Kraftfahrzeugs angepasst wird.

5. Verfahren nach einem der Ansprüche 1 bis 4, **dadurch gekennzeichnet, dass** der Sollwert in der Kurvenphase und jenseits der Kurvenphase in Abhängigkeit von der Querbeschleunigung (Gammat) des Kraftfahrzeugs angepasst wird.

6. Verfahren nach einem der Ansprüche 1 bis 5, **dadurch gekennzeichnet, dass** der Sollwert in der Kurvenphase und jenseits der Kurvenphase in Abhängigkeit von der Geschwindigkeit des Kraftfahrzeugs (Vveh) angepasst wird.

7. Verfahren nach einem der Ansprüche 1 bis 6, **dadurch gekennzeichnet, dass** der Sollwert in der Kurvenphase und jenseits der Kurvenphase in Abhängigkeit vom maximalen augenblicklichen Drehmoment angepasst wird, das an die Räder des Kraftfahrzeugs anwendbar ist (Cmax).

8. Verfahren nach einem der vorhergehenden Ansprüche, **dadurch gekennzeichnet, dass** der Schritt der Berechnung der an eine Kurvensituation angepassten statischen Drehmomentkomponente die folgenden Unterschritte aufweist:
d) Berechnen eines Brutto-Kurvensollwertsignals (Vir_brut) in Abhängigkeit von der Geschwindigkeit des Kraftfahrzeugs (Vveh), der Querbeschleunigung des Kraftfahrzeugs (Gammat) und der Motordrehzahl des Kraftfahrzeugs (N),
e) Konstruieren eines ersten Stufensignals entsprechend dem einen Brutto-Kurvensollwertsignal, aber verzögert (Vir_ret), und eines zweiten Signals entsprechend dem einen Brutto-Kurvensollwertsignal, aber gefiltert (Vir_fil), und
f) Vergleichen und Integrieren des dem einen Brutto-Kurvensollwertsignal entsprechenden, aber gefilterten, Signal (Vir_ret) mit einer Liste von vorbestimmten Eingangsparametern, die die statische Brutto-Drehmomentkomponente (Cs_brut), das an die Räder des Kraftfahrzeugs anwendbare maximale augenblickliche Drehmoment (Cmax), die Geschwindigkeit des Kraftfahrzeugs (Vveh), die Querbeschleunigung des Kraftfahrzeugs (Gammat) enthält.

9. Verfahren nach Anspruch 8, **dadurch gekennzeichnet, dass** das Brutto-Kurvensollwertsignal (Vir_brut) durch Vergleich der Querbeschleunigung des Kraftfahrzeugs (Gammat) mit dynamischen Schwellwerten konstruiert wird, die in Abhängigkeit von der Geschwindigkeit des Kraftfahrzeugs (Vveh) und der Motordrehzahl des Kraftfahrzeugs (N) kartographiert werden.

10. Vorrichtung eines automatischen Getriebes eines Antriebsaggregats eines Kraftfahrzeugs, die geeignet ist, um ein Signal eines an die Räder des Kraftfahrzeugs anzuwendenden Drehmomentsollwerts mit zwei Komponenten zu liefern, einer statischen (Cs) und einer dynamischen (Cd), die in Abhängigkeit von von einem Eingangsblock (1) gelieferten Eingangsdaten erarbeitet werden, der eine Liste aufweist, in die Parameter eingetragen sind, die für den Willen des Fahrers, den Zustand des Kraftfahrzeugs und die Umgebung des Kraftfahrzeugs repräsentativ sind, **dadurch gekennzeichnet, dass** sie aufweist:
- einen ersten Block (11), der geeignet ist, um eine dynamische Drehmomentkomponente ohne Anpassung an die Kurvensituation (Cd_brut) zu berechnen,
- einen zweiten Block (15), der geeignet ist, um eine statische Brutto-Drehmomentkomponente (Cs_brut) zu berechnen, verbunden mit dem Ausgang des ersten Blocks (11), der geeignet ist, um die dynamische Drehmomentkomponente ohne Anpassung an die Kurvensituation zu berechnen,
- einen Block (17) der Anpassung an die Kurvensituation, der in Abhängigkeit von einer Liste von vorbestimmten Eingangsparametern eine an die Kurvensituation (Cs_vir) angepasste statische Drehmomentkomponente liefert.

11. Vorrichtung nach Anspruch 10, **dadurch gekennzeichnet, dass** sie Mittel (22) zur Integration der an eine Kurvensituation angepassten statischen Drehmomentkomponente mit zusätzlichen Korrekturen in Abhängigkeit von der betrachteten Fahrphase aufweist.

12. Vorrichtung nach Anspruch 10, **dadurch gekennzeichnet, dass** die Liste von vorbestimmten Parametern des Blocks zur Anpassung an die Kurvensituation die statische Brutto-Drehmomentkomponente (Cs_brut), das an die Räder des Kraftfahrzeugs anwendbare augenblickliche maximale Drehmoment (Cmax), die Geschwindigkeit des Kraftfahrzeugs (Vveh), die Querbeschleunigung des Kraftfahrzeugs (Gammat) und den laufenden Sollwert der Motordrehzahl (N) enthält.

13. Vorrichtung nach Anspruch 10, **dadurch gekennzeichnet, dass** der Block zur Anpassung an die Kurvensituation (17) der statischen Brutto-Drehmomentkomponente (Cs_brut) aufweist:
- einen ersten Block (42) der Konstruktion eines Brutto-Kurvensollwertsignals (Vir_brut),
- einen zweiten Block (47) der Konstruktion eines dem Brutto-Kurvensollwertsignal entsprechenden, aber verzögerten Stufensignals (Vir_ret) und eines dem Brutto-Kurvensollwertsignal entsprechenden, aber gefilterten Signals (Vir_fil),
- einen Filterblock (40) der Querbeschleunigung des Fahrzeugs (Gammat),
- ein Mittel, das geeignet ist, um eine erste Kartographie zu speichern (35), das einen Gewichtungssollwert (ActionVveh) in Abhängigkeit von der Geschwindigkeit des Kraftfahrzeugs (Vveh) liefert,
- ein Mittel, das geeignet ist, um eine zweite Kartographie zu speichern (38), um in Abhängigkeit von der vom Filterblock (40) gefilterten Querbeschleunigung (Gammat) des Kraftfahrzeugs einen Prozentsatz (PourcDeltabrut) der Abweichung (DeltaC) zwischen der an die Räder des Kraftfahrzeugs anwendbaren augenblicklichen maximalen Drehmomentkomponente (Cmax) und der statischen Brutto-Drehmomentkomponente (Cs_brut) zu bestimmen,
- Mittel zum Vergleich und zur Integration des Kurvensollwertsignals, das brutto aber gefiltert ist, mit der statischen Brutto-Drehmomentkomponente (Cs_brut), dem an die Räder des Kraftfahrzeugs anwendbaren augenblicklichen maximalen Drehmoment (Cmax), der Geschwindigkeit des Kraftfahrzeugs (Vveh), der Motordrehzahl des Kraftfahrzeugs (N) und der Querbeschleunigung des Kraftfahrzeugs (Gammat).

14. Vorrichtung nach Anspruch 13, **dadurch gekennzeichnet, dass** der erste Konstruktionsblock (42) Mittel, die geeignet sind, um zwei Kartographien (71, 72) bezüglich eines positiven bzw. negativen Schwellwerts der Querbeschleunigung des Fahrzeugs (Gammat) zu speichern, und Vergleichsmittel (77, 78) aufweist, die geeignet sind, das für die Kurve (Vir_brut) repräsentative Bruttosignal in Abhängigkeit von einer Liste von vorbestimmten Parametern zu erzeugen.

15. Vorrichtung nach Anspruch 14, **dadurch gekennzeichnet, dass** die Liste von vorbestimmten Parametern die Motordrehzahl des Kraftfahrzeugs (N), die Querbeschleunigung des Kraftfahrzeugs (Gammat) und die Geschwindigkeit des Kraftfahrzeugs (Vveh) enthält.
